# FASCICULE DE BREVET EUROPEEN

(11) **EP 2 094 399 B1**
(45) Date de publication et mention de la délivrance du brevet: **20.10.2010**
(21) Numéro de dépôt: 07871810.3
(22) Date de dépôt: 07.12.2007
(51) Int. Cl.: B05D 5/00, C04B 41/46, C09D 5/00, C09D 7/12, C09D 9/00

(54) **TRAITEMENT ANTI-GRAFFITIS FACILITANT L'ELIMINATION D'UNE PEINTURE SUR UN MATERIAU DE CONSTRUCTION.**
ANTIGRAFFITIBEHANDLUNG ZUR ERMÖGLICHUNG DER ENTFERNUNG VON LACK VON EINEM KONSTRUKTIONSMATERIAL
ANTIGRAFFITI TREATMENT ENABLING THE REMOVAL OF PAINT FROM A CONSTRUCTION MATERIAL

(30) Priorité: 18.12.2006 FR 0611016
(43) Date de publication de la demande: 02.09.2009
(73) Titulaire: Rhodia Opérations, 93306 Aubervilliers (FR)
(72) Inventeur: TOUZET, Sylvie, F-92160 Antony (FR); PRAT, Evelyne, F-93500 Pantin (FR); DESCHASEAUX, Florence, F-75019 Paris (FR); BILLEBAUD, Valérie, F-92600 Asnieres-sur-seine (FR)
(74) Mandataire: Seugnet, Jean Louis
(86) Numéro de dépôt international: PCT/FR2007/002015
(87) Numéro de publication internationale: WO 2008/087271

(56) Documents cités:
- FR-A1- 2 735 482
- FR-A1- 2 797 262
- US-A1- 2005 136 217
- US-B2- 7 052 770

## Description

La présente invention a pour objet un traitement antigraffitis facilitant l'élimination d'une peinture sur un matériau de construction. Il peut s'agir par exemple d'un traitement anti-graffitis. Le traitement utilise un produit beta-dicarbonylé.

Afin d'éliminer des revêtements et/ou souillures, comme des graffitis, des matériaux de construction, on utilise des traitements visant à faciliter l'élimination. Le traitement est typiquement appliqué sur le matériau. Si quelqu'un réalise un graffiti, alors le matériau est nettoyé à l'aide d'une composition appropriée. Le traitement préalable favorise l'élimination.

Pour ces traitements, on connaît l'utilisation de polymères de type latex fluorés. Un produit comprenant de tels polymères, destiné à être appliqué sur des matériaux de construction, est notamment commercialisé sous la dénomination Protectguard®. Ces polymères ne donnent toutefois pas toujours des résultats satisfaisants. Par ailleurs les polymères de type latex fluorés sont coûteux. Il existe un besoin pour des traitements alternatifs et moins coûteux.

US 2005/136217 D1 vise la préparation de surfaces autonettoyantes présentant des aspérités et des creux par revêtement de la dite surface d'une couche d'un matériau hydrophobe suivi de l'élimination de ce revêtement par lavage ou moyen mécanique avec la salissure.

FR 2 797 262 D2 vise également un procédé de traitement de matériau architectural pour leur conférer des propriétés anti-salissures mais également antifongiques et/ou bactéricides par projection de dispersions en phase liquide de composés photo catalytiques à base d'oxyde ou de sulfure métallique et d'au moins un promoteur d'adhérence.

US 7 052 770 D3 vise un revêtement de matériau de constructions mais ce revêtement est dur et permanent et est en fait clairement un revêtement de silicones réticulés obtenu par condensation de silanes et de résines alcoxylés en présence de catalyseurs de condensation.

FR 2 735 482 D4 décrit des béta-dicétones pour des applications du type additifs pour polymères chlorés.

La présente invention répond à ce besoin en proposant l'utilisation d'un produit beta-dicarbonylé comme agent de traitement anti-graffitis facilitant l'élimination d'une peinture sur un matériau de construction, ledit produit beta-dicarbonylé étant :
le 5-méthyl-1-phenylhaxane-1,3-dione,
l'octanoyl benzoyl methane,
l'heptanoyl benzoyl methane,
le stearoyl benzoyl methane,
le dibenzoyl methane, ou
l'acetylacetonate de calcium ou de zinc.

L'invention concerne aussi un procédé de traitement anti-graffitis d'un matériau de construction comprenant une étape d'application d'un produit beta-dicarbonylé à la surface du matériau. L'invention concerne aussi le matériau ainsi traité, comprenant le produit beta-dicarbonylé.

Le revêtement et/ou la souillure est une peinture.. La peinture peut être le résultat de graffitis, généralement effectués dans un but décoratif, artistique, revendicatif, et/ou dénonciateur, mais non désiré par le propriétaire, le fabriquant et/ou l'utilisateur du matériau de construction. Le traitement est donc être un traitement anti-graffitis.

On mentionne que la peinture peut avoir été appliquée dans un but précis par le propriétaire, le fabriquant et/ou l'utilisateur, par exemple dans un but de marquage et/ou dans un but de sécurité. Dans ce cas ledit propriétaire, fabriquant et/ou utilisateur aura appliqué la peinture à titre temporaire, dans le but de l'éliminer par la suite.

Dans la présente demande, on entend par matériau de construction tout élément de grande taille que l'on peut trouver dans la sphère publique (intérieurs de bâtiments accessibles à un grand nombre de personnes dont les entreprises, les restaurants, parties extérieures de bâtiments accessibles aux tiers, transports, sols, mobilier urbain, etc... ), par opposition à la sphère privée (parties d'appartements ou de maisons non accessibles aux tiers).

Le matériau de construction peut par exemple être:
- une céramique de préférence un carrelage par exemple de type de type grès émaillé,
- un matériau à liant hydraulique, de préférence en ciment, un mortier, ou un béton,
- du bois,
- de la terre cuite, par exemple des briques, des tuiles, des tomettes, ou
- de la pierre, de préférence poreuse.

Il peut notamment s'agir de surfaces extérieures de type façades, pierre de taille, balustres, corniches, statues, joints, linteaux et tableaux des ouvertures, parements, soubassements, balcons, terrasses, marches d'escalier, cheminements et allées piétonnes, clôtures, jardinières, aires de stationnement, allées carrossables, sols de garages, margelles de piscine, abords de fontaine, barbecues, toitures, cheminées.

Il peut s'agir de surfaces intérieures de type sols ; pierres de cheminée, plans de travail, joints de carrelage, etc.

Il peut notamment s'agir d'un matériau poreux comme des pierres calcaires, marbres, grès, granits, ardoises, terres cuites (tuiles, briques, tomettes), bétons, enduits (MPC), pierres reconstituées, bitume.

Le matériau de construction peut être un élément pré-fabriqué, ou un élément de construction préparé sur le site de la construction.

L'élimination de la peinture peut être totale ou partielle. L'invention permet notamment:
- d'augmenter l'élimination par rapport à une élimination ou aucun traitement n'a préalablement été appliqué, et/ou
- de minimiser les efforts et/ou les quantités de composition d'élimination, à traitement égal.

Pour le traitement le produit beta-dicarbonylé est de préférence compris dans une composition de traitement liquide. L'application du produit peut être réalisée par tout moyen approprié, par exemple par trempage, pulvérisation, application d'un pinceau ou d'un rouleau. On pourra notamment utiliser des moyens mis en oeuvre dans le domaine de la peinture et/ou du nettoyage, par exemple des pistolets à peinture, ou des pulvérisateurs sous pression.

La quantité de traitement appliquée peut par exemple être comprise entre 0,005 et 0,5 g/m² (exprimé en quantité de produit beta-dicarbonylé sec).

Le traitement peut être appliqué une fois, ou être appliqué plusieurs fois, à intervalle de temps choisi (par exemple une fois par an).

De manière générale le traitement sera suivi, après application d'une peinture, notamment après réalisation d'un graffiti, d'une étape d'élimination de la peinture, à l'aide d'une composition d'élimination comprenant un solvant et/ou un décapant. A titre de solvant pouvant être utilisé, on cite notamment les cétones comme la méthylétylcétone (MEK), les diesters d'acide dicarboxyliques, de préférence les diméthyl esters, par exemple le produit commercialisé par Rhodia sous la dénomination Rhodiasolv® RDPE. Des compositions d'élimination sont également disponibles dans le commerce. On cite par exemple le produit commercialisé sous la dénomination Graffiguard®.

Il n'est pas exclu d'ajouter à la composition d'élimination un produit beta-dicarbonylé, afin de régénérer le traitement.

### Produit beta-dicarbonylé

Le produit beta-dicarbonylé est :
le 5-méthyl-1-phenylhaxane-1,3-dione,
l'octanoyl benzoyl methane,
l'heptanoyl benzoyl methane,
le stearoyl benzoyl methane,
le dibenzoyl méthane, ou
l'acetylacetonate de calcium ou de zinc.

Le composé beta-dicarbonylé peut notamment être sous forme complètement organique ou sous forme d'un complexe d'un métal, d'un métal alcalin ou alcalino-terreux, par exemple d'un complexe de zinc ou de calcium.

Le composé beta-dicarbonylé peut être obtenu par une réaction de condensation d'un ester sur une cétone en présence d'un agent alcalin, typiquement une base forte comme un amidure ou un alcoolate.

Selon un mode de réalisation de l'invention, la réaction est effectuée en présence d'un solvant. Ce dernier est choisi parmi les composés inertes dans les conditions de réaction.

Classiquement, il est choisi parmi les hydrocarbures aromatiques, aliphatiques ou cycliques ; les fractions hydrocarbonées, les éthers.

De préférence, le solvant est choisi parmi les alkylbenzènes, comme le toluène, les dialkylbenzènes et les trialkylbenzènes, mais aussi l'éther isopropylique ; le toluène, le xylène, étant préférés.

Par ailleurs, la réaction de condensation est réalisée en présence d'un agent basique (ou "agent alcalin"). Plus spécialement, ledit agent est choisi parmi les amidures, les hydrures, les alcoolates comprenant 1 à 4 atomes de carbone.

Habituellement, le nombre de moles d'agent basique présent durant la réaction est tel que le rapport molaire agent basique / somme des moles d'ester et de cétone, est voisin de 1.

Selon un premier mode de réalisation, la réaction de condensation est effectuée en présence d'un hydrure de sodium, ou de préférence d'amidure de sodium.

Du fait de la présence d'amidure de sodium il est préférable d'effectuer la réaction sous atmosphère inerte, de préférence sous balayage d'azote.

En outre, la réaction s'effectue à une température située de préférence entre 30 et 60°C.

Selon un deuxième mode de réalisation de l'invention, l'agent basique est un alcoolate de sodium, dont l'alcool correspondant est volatile dans les conditions de la réaction de condensation. De préférence l'alcoolate est le méthylate de sodium.

En outre, dans ce cas, le solvant est choisi parmi ceux présentant une température d'ébullition supérieure d'au moins 20 °C à la température de la réaction.

De préférence, la réaction est réalisée à reflux du solvant.

Quelle que soit la variante retenue, la réaction est de préférence réalisée en introduisant la cétone dans l'ester comprenant l'agent basique, et le cas échéant le solvant.

Selon la nature de l'agent basique, il est judicieux de prévoir des moyens de récupération, soit le l'ammoniac produit, soit de l'alcool produit.

Dans le cas particulier où ledit agent est un alcoolate, l'élimination de l'alcool produit au fur et à mesure de son apparition dans le mélange réactionnel représente une caractéristique très avantageuse du procédé et permet entre autres d'augmenter le rendement en composé β-dicarbonylé souhaité.

En fin de réaction, quelle que soit, là encore, la variante retenue, le milieu réactionnel est de préférence acidifié.

Dans ce but, on introduit le mélange réactionnel dans une solution aqueuse d'un acide dont les préférés sont l'acide acétique, l'acide chlorhydrique et l'acide sulfurique. On règle le pH de la couche aqueuse à une valeur comprise de préférence entre 1 et 3.

Après au moins un lavage à l'eau, on élimine le solvant par tout moyen convenable, par exemple par évaporation et l'on obtient un produit brut.

Ce produit brut comprend le composé beta-dicarbonylé souhaité (R^{1'}COCH₂COR³), ainsi que des homologues symétriques (R¹'COCH₂COR^{1'}, R3COCH₂COR³), de même que des sous-produits. Il peut donc s'agir d'un "mélange complexe" comme expliqué ci-dessus.

Il est à noter que la composition exacte des sous-produits est très complexe à évaluer. Ils peuvent notamment provenir de réactions de crotonisation des composés β-dicarbonylés entre eux, de l'apparition d'espèces comprenant des fonctions amides si l'agent basique comprend de l'azote.

Selon une première possibilité, le produit beta-dicarbonylé comprend un mélange correspondant au produit brut issu de la réaction de condensation.

Dans le cas de cette possibilité, la teneur en composés beta-dicarbonylés est en générale comprise entre 40 et 95% en poids, de préférence entre 40 et 80 % en poids, et la teneur en sous-produits de 5 à 60 % en poids, de préférence de 20 à 60 % en poids.

Le produit beta-dicarbonylé selon cette possibilité peut se présenter sous la forme d'un solide divisé, qui selon les méthodes de mise en forme employées, peut se trouver sous une forme de poudre ou encore d'écailles.

Parmi les méthodes de mise en forme de la composition, on peut citer sans intention de se limiter, l'écaillage, la précipitation dans un solvant, le broyage cryogénique, la pulvérisation/séchage dans un courant gazeux.

L'écaillage permet d'éliminer le solvant du mélange réactionnel par passage de la solution sur un tambour tournant refroidi en permanence. Le produit solidifié à la surface du tambour est récupéré par une racle sous forme d'écailles.

La technique de précipitation dans un solvant consiste par exemple à couler le produit brut sous forme fondue dans un composé à température ambiante, qui n'est pas un bon solvant à cette température, de ce produit brut, comme par exemple l'éthanol ou le méthanol, et on sépare le précipité formé.

Pour ce qui concerne le broyage cryogénique, on procède en général en introduisant dans un broyeur, de l'azote liquide ou tout autre d'autre gaz liquide inerte tel que le CO₂, et le produit brut réactionnel sous forme de morceaux de quelques millimètres à quelques centimètres obtenus par broyage grossier ou bien par la technique d'écaillage.

Enfin, la méthode de pulvérisation / séchage consiste à pulvériser le produit brut réactionnel à l'état fondu à travers un flux de gaz froid inerte introduit à contre-courant ou co-courant.

Selon une deuxième possibilité, le produit beta-dicarbonylé comprend un mélange correspondant au produit récupéré lors d'une étape de purification et après séparation d'avec le composé beta-dicarbonylé.

Selon cette variante, le produit brut est recristallisé dans un solvant approprié, par exemple un alcool comme l'éthanol. Le composé beta-dicarbonylé purifié est séparé, notamment par filtration, d'une solution comprenant le solvant et un mélange de sous-produits et de composés beta-dicarbonylés. La solution est ensuite traitée de manière à éliminer le solvant de cristallisation, par exemple par évaporation. On récupère ainsi le produit A selon cette deuxième possibilité.

Conformément à cette possibilité, la teneur en composés beta-dicarbonylés est en générale comprise entre 5 et moins de 40 % en poids, et une teneur en sous-produits comprise entre de 60% à 95% en poids.

Le produit beta-dicarbonylé selon cette deuxième possibilité se peut se trouver sous une forme solide et/ou pâteuse.

Le produit beta-dicarbonylé est avantageusement compris dans une composition de traitement liquide. La composition de traitement peut en outre comprendre de l'eau et/ou un solvant et/ou un décapant. Si on utilise le produit beta-dicarbonylé seul, on pourra préférer un utiliser un qui est liquide.

Des produits beta-dicarbonylé pouvant être utilisés sont les produits qui comprennent:
- le 5-méthyl-1-phenylhaxane-1,3-dione,
- l'octanoyl benzoyl methane,
- l'heptanoyl benzoyl methane,
- le stearoyl benzoyl methane,
- le dibenzoyl méthane, et/ou
- l'acetylacetonate de calcium ou de zinc.

De tels produits sont commercialisé par la société Rhodia sous la dénomination Rhodiastab®.

On mentionne que le produit beta-dicarbonylé peut être associé à d'autres agents de traitement, notamment à des polymères de type latex fluoré, comme ceux compris dans le produit commercialisé sous la dénomination Graffigard®. L'association peut être typiquement effectuée dans une composition de traitement. Une telle composition peut conférer une complémentarité, c'est-à-dire un action sur une plus grande gamme de revêtement et/ou de souillures, et/ou contribuer à diminuer le coût des traitements.

La composition de traitement peut en outre comprendre un vecteur, par exemple un solvant. Des solvants appropriés ont été mentionnés plus haut pour la composition d'élimination. La composition peut comprendre d'autres additifs, qui peuvent être choisis parmi les additifs couramment utilisés pour ce type de traitement. Il peut par exemple s'agir d'agents antimousse ou d'agents épaississants. De préférence la composition de traitement comprend au moins 10% en poids, de préférence au moins 25% en poids, et jusqu'à 100% en poids ou moins par exemple jusqu'à 90% en poids, du produit beta-dicarbonylé.

D'autres détails ou avantages de l'invention pourront apparaître au vu des exemples qui suivent, sans caractère limitatif.

### EXEMPLES

On utilise les produits ci-dessous:

### Traitements:

- "Rh92": Rhodiastab® 92
- "Rh92/RPDE": Mélange de 50% en poids de Rhodiastab® 92 et 50% en poids de Rhodiasolv® RPDE
- Protectguard®, commercialisé par Guard Industrie, distribué dans les magasins Point P (comparatif)
- Novipro®, commercialisé par produit par une société joingnable au n° (33) 825 077 077 (comparatif)

### Matériau:

- Plaque de carrelage extérieur avec une face poreuse et une face non poreuse, similaire au carrelage 36x36, distribué dans les magasins Point P, sous la référence 142 1408.
- Panneau de bois de pin
- Parpaing

### Peinture simulant un graffiti:

- Peinture aérosol orange fluorescent, "Orange Fluo TP", commercialisée par la société Soppec, distribué dans les magasins Point P.

### Composition d'élimination:

A: Rhodiasolv® RPDE
B: Graffiguard® 2030, commercialisé par Guard Industrie, distribué dans les magasins Point P.
C: Graffiguard® 2050, commercialisé par Guard Industrie, distribué dans les magasins Point P.

### Tests

On met en oeuvre des tests dans lesquels on applique un traitement ("imprégnation"), on applique une peinture ("application"), on vieillit la peinture dans différentes conditions ("vieillissement"), on élimine la peinture ("Désencrage"), puis on évalue visuellement la quantité de peinture éliminée (on attribue une note). Des détails quant aux différentes opérations sont fournis ci-dessous.

### Imprégnation sur plaque de carrelage

On applique 3 ml du traitement sur la surface non poreuse et 6 ml sur la surface poreuse (à 0,0533 g/m²), on étale avec du papier absorbant, et on sèche à température ambiante.

### Imprégnation sur bois

On applique le traitement au pinceau.

### Application

La peinture est appliquée à la bombe, avec trois passages.

### Vieillissement

On opère différents types de vieillissements:
- Vieillissement 1: séchage 24h à température ambiante
- Vieillissement 2: séchage 24h à température ambiante puis 30 jours au Xénotest (simulant les UV et la pluie).
- Vieillissement 3: séchage 24h à température ambiante puis 4 semaines en brouillard salin (5% NaCl, 35°C)

### Désencrage

On dépose de 2 ml de composition d'élimination pendant 5 min sur les plaques posées horizontalement, puis on nettoie avec du papier absorbant.

### Notation

| Note | Evaluation | Photographie |
|---|---|---|
| 0 | la surface n'est pas nettoyée | Figure 1 |
| 1 | 20% de la surface est nettoyée | Figure 2 |
| 2 | 40% de la surface est nettoyée | Figure 3 |
| 3 | 60% de la surface est nettoyée | Figure 4 |
| 4 | 80% de la surface est nettoyée | Figure 5 |
| 5 | 100% de la surface est nettoyée | Figure 6 |

Des photographies sont réalisées et présentées dans les figures.

### Exemples 1 à 13: Traitement de la face lisse du carrelage

La lettre C indique un exemple comparatif. On reporte la note avec les différents traitements, les différents vieillissements et les différentes compositions d'élimination.

| | | Vieillissement 1 | |
|---|---|---|---|
| Exemple | Traitement | Composition d'élimination A | Composition d'élimination B |
| 1C | Aucun | 0,5 | 1 |
| 2C | Protectguard | 4,5 | 5 |
| 3 | Rh92 | 4,5 | 4,5 |
| 4C | Novipro | 2 | 4,5 |
| 5 | Rh92/RPDE | 4 | 4,5 |

| | | Vieillissement 2 | |
|---|---|---|---|
| Exemple | Traitement | Composition d'élimination A | Composition d'élimination B |
| 6C | Protectguard | 3,5 | 4,5 |
| 7 | Rh92 | 3 | 4,5 |
| 8C | Novipro | 3 | 4 |
| 9 | Rh92/RPDE | 2,5 | 3,5 |

| | | Vieillissement 3 | |
|---|---|---|---|
| Exemple | Traitement | Composition d'élimination A | Composition d'élimination B |
| 10C | Protectguard | 3 | 4 |
| 11 | Rh92 | 2,5 | 4 |
| 12C | Novipro | 1 | 4 |
| 13 | Rh92/RPDE | 1 | 4 |

### Exemples 14 à 27: Traitement de la face poreuse du carrelage

La lettre C indique un exemple comparatif. On reporte la note avec les différents traitements, les différents vieillissements et les différentes compositions d'élimination.

| | | Vieillissement 1 | |
|---|---|---|---|
| Exemple | Traitement | Composition d'élimination A | Composition d'élimination B |
| 14C | Aucun | 0 | 1 |
| 15C | Protectguard | 2,5 | 4,5 |
| 16 | Rh92 | 3,5 | 5 |
| 17C | Novipro | 0,5 | 4,5 |
| 18 | Rh92/RPDE | 0,5 | 5 |

| | | Vieillissement 2 | |
|---|---|---|---|
| Exemple | Traitement | Composition d'élimination A | Composition d'élimination B |
| 19C | Protectguard | 2,5 | 4,5 |
| 20 | Rh92 | 1 | 4,5 |
| 21C | Novipro | 2,5 | 4,5 |
| 22 | Rh92/RPDE | 2,5 | 4,5 |

| | | Vieillissement 3 | |
|---|---|---|---|
| Exemple | Traitement | Composition d'élimination A | Composition d'élimination B |
| 23C | Protectguard | 0 | 3,5 |
| 24 | Rh92 | 1 | 4 |
| 25C | Novipro | 0,5 | 4 |
| 26 | Rh92/RPDE | 0,5 | 5 |

On constate que les traitements de l'invention, à composition d'élimination égale, donnent des résultats d'élimination de la peinture égaux ou supérieurs aux comparatifs.

### Exemples 27 à 28: Traitement du bois de pin

La lettre C indique un exemple comparatif. On reporte la note avec ou sans le traitement, et la composition d'élimination A.

| | | Vieillissement 1 |
|---|---|---|
| Exemple | Traitement | Composition d'élimination A |
| 27C | Aucun | 0 |
| 28 | Rh92/RPDE | 4.5 |

### Exemples 29 à 30: Traitement du parpaing

La lettre C indique un exemple comparatif. On reporte la note avec ou sans le traitement, et les différentes compositions d'élimination.

| | | Vieillissement 1 | |
|---|---|---|---|
| Exemple | Traitement | Composition d'élimination A | Composition d'élimination B |
| 29C | Aucun | 0.5 | 2.5 |
| 30 | Rh92/RPDE | 1 | 4 |

Le traitement empêche la peinture de s'imprégner.

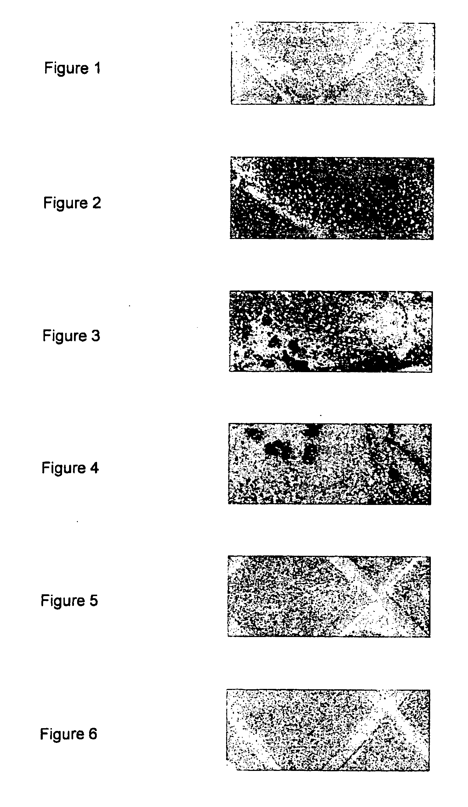

## Revendications

1. Utilisation d'un produit beta-dicarbonylé comme agent de traitement anti-graffitis facilitant l'élimination d'une peinture sur un matériau de construction, ledit produit beta-dicarbonylé étant :
le 5-méthyl-1-phenylhexane-1,3-dione,
l'octanoyl benzoyl méthane,
l'heptanoyl benzoyl méthane,
le stéaroyl benzoyl méthane,
le dibenzoyl méthane, ou
l'acétylacétonate de calcium ou de zinc.

2. Utilisation selon la revendication 1, **caractérisée en ce que** le matériau de construction est:
- une céramique,
- un matériau à liant hydraulique,
- du bois,
- de la terre cuite, ou
- de la pierre.

3. Utilisation selon l'une des revendications précédentes, **caractérisée en ce que** produit beta-dicarbonylé est compris dans une composition de traitement liquide.

4. Utilisation selon la revendication 3, **caractérisée en ce que** la composition comprend de l'eau et/ou un solvant et/ou un décapant.

5. Utilisation selon l'une des revendications précédentes, **caractérisée en ce que** le produit beta-dicarbonylé est un composé beta-dicarbonylé, ou un mélange de composés beta-dicarbonylés ou un mélange complexe comprenant au moins un composé beta-dicarbonylé, ces mélanges comprenant au moins 5% en poids de composés beta-dicarbonylés, de préférence au moins 10% en poids, de préférence au moins 50% en poids, de préférence au moins 80% en poids.

6. Utilisation selon l'une des revendications précédentes, **caractérisée en ce que en ce que** l'élimination est totale ou partielle.

7. Procédé de traitement anti-graffitis d'un matériau de construction pour faciliter l'élimination d'une peinture, comprenant une étape d'application d'un produit beta-dicarbonylé à la surface du matériau ledit produit beta-dicarbonylé étant :
le 5-méthyl-1-phenylhexane-1,3-dione,
l'octanoyl benzoyl méthane,
l'heptanoyl benzoyl méthane,
le stéaroyl benzoyl méthane,
le dibenzoyl méthane, ou
l'acétylacetonate de calcium ou de zinc.

8. Procédé selon la revendication 7, **caractérisé en ce que** le produit beta-dicarbonylé est compris dans une composition de traitement liquide.

9. Procédé selon l'une des revendications précédentes, **caractérisé en ce que** le traitement anti-graffitis est suivi, après application d'une peinture, d'une étape d'élimination de la peinture , à l'aide d'une composition d'élimination comprenant un solvant et/ou un décapant.

## Claims

1. Use of a β-dicarbonyl product as an anti-graffiti treatment agent for facilitating the removal of paint on a building material, said β-dicarbonyl product being:
- 5-methyl-1-phenylhexane-1,3-dione,
- octanoylbenzoylmethane,
- heptanoylbenzoylmethane,
- stearoylbenzoylmethane,
- dibenzoylmethane, or
- calcium or zinc acetylacetonate.

2. Use according to Claim 1, **characterized in that** the building material is:
- a ceramic,
- a hydraulic binder material,
- wood,
- terracotta, or
- stone.

3. Use according to either of the preceding claims, **characterized in that** the β-dicarbonyl product is included in a liquid treatment composition.

4. Use according to Claim 3, **characterized in that** the composition comprises water and/or a solvent and/or a stripper.

5. Use according to one of the preceding claims, **characterized in that** the β-dicarbonyl product is a β-dicarbonyl compound, or a mixture of β-dicarbonyl compounds or a complex mixture comprising at least one β-dicarbonyl compound, these mixtures comprising at least 5% by weight, preferably at least 10% by weight, preferably at least 50% by weight and preferably at least 80% by weight of β-dicarbonyl compounds.

6. Use according to one of the preceding claims, **characterized in that** the removal is total or partial.

7. Process for the anti-graffiti treatment of a building material to facilitate the removal of paint, comprising a step of applying a β-dicarbonyl product to the surface of the material, said β-dicarbonyl product being:
- 5-methyl-1-phenylhexane-1,3-dione,
- octanoylbenzoylmethane,
- heptanoylbenzoylmethane,
- stearoylbenzoylmethane,
- dibenzoylmethane, or
- calcium or zinc acetylacetonate.

8. Process according to Claim 7, **characterized in that** the β-dicarbonyl product is included in a liquid treatment composition.

9. Process according to one of the preceding claims, **characterized in that** the anti-graffiti treatment is followed, after application of paint, by a step of removing the paint, with the aid of a removal composition comprising a solvent and/or a stripper.

## Patentansprüche

1. Verwendung eines beta-Dicarbonylprodukts als Behandlungsmittel gegen Graffitis, welches das Entfernen einer Malerei auf einem Baumaterial erleichtert, wobei dieses beta-Dicarbonylprodukt eines der Folgenden ist:
5-Methyl-1-pheriylhexan-1,3-dion,
Octanoylbenzoylmethan,
Heptanoylbenzoylmethan,
Stearoylbenzoylmethan,
Dibenzoylmethan, oder
Calcium- oder Zinkacetylacetonat.

2. Verwendung nach Anspruch 1, **dadurch gekennzeichnet, dass** das Baumaterial eines der Folgenden ist:
- eine Keramik
- ein hydraulisches Bindemittelmaterial,
- Holz,
- Terrakotta, oder
- Stein.

3. Verwendung nach einem der vorhergehenden Ansprüche, **dadurch gekennzeichnet, dass** das beta-Dicarbonylprodukt in einer flüssigen Behandlungszusammensetzung enthalten ist.

4. Verwendung nach Anspruch 3, **dadurch gekennzeichnet, dass** die Zusammensetzung Wasser und/oder ein Lösungsmittel und/oder ein Abbeizmittel umfasst.

5. Verwendung nach einem der vorhergehenden Ansprüche, **dadurch gekennzeichnet, dass** das beta-Dicarbonylprodukt eine beta-Dicarbonylverbindung oder eine Mischung aus beta-Dicarbonylverbindungen oder eine komplexe Mischung ist, die mindestens eine beta-Dicarbonylverbindung umfasst, wobei diese Mischungen mindestens 5 Gew.-%, vorzugsweise mindestens 10 Gew.-%, vorzugsweise mindestens 50 Gew.-%, vorzugsweise mindestens 80 Gew.-% der beta-Dicarbonylverbindungen umfassen.

6. Verwendung nach einem der vorhergehenden Ansprüche, **dadurch gekennzeichnet, dass** das Entfernen vollständig oder teilweise erfolgt.

7. Behandlungsverfahren gegen Graffitis auf einem Baumaterial, um das Entfernen einer Malerei zu erleichtern, umfassend einen Schritt des Aufbringens eines beta-Dicarbonylprodukts auf der Oberfläche des Materials, wobei dieses beta-Dicarbonylprodukt eines der Folgenden ist:
5-Methyl-1-phenylhexan-1,3-dion,
Octanoylbenzoylmethan,
Heptanoylbenzoylmethan,
Stearoylbenzoylmethan,
Dibenzoylmethan,
oder Calcium- oder Zinkacetylacetonat.

8. Verfahren nach Anspruch 7, **dadurch gekennzeichnet, dass** das beta-Dicarbonylprodukt in einer flüssigen Behandlungszusammensetzung enthalten ist.

9. Verfahren nach einem der vorhergehenden Ansprüche, **dadurch gekennzeichnet, dass** auf die Behandlung gegen Graffitis, nach dem Aufbringen einer Malerei, ein Schritt des Entfernens der Malerei mit Hilfe einer Entfernungszusammensetzung folgt, die ein Lösungsmittel und/oder ein Abbeizmittel umfasst.
